# EUROPÄISCHE PATENTSCHRIFT

(11) **EP 2 191 229 B1**
(45) Veröffentlichungstag und Bekanntmachung des Hinweises auf die Patenterteilung: **20.07.2011**
(21) Anmeldenummer: 08804015.9
(22) Anmeldetag: 11.09.2008
(51) Int. Cl.: G01B 11/24, G06T 5/00

(54) **VERFAHREN ZUR BESTIMMUNG EINER KANTE EINES OPTISCH ZU VERMESSENDEN OBJEKTES SOWIE KOORDINATENMESSGERÄT**
METHOD FOR DETERMINING AN EDGE OF AN OBJECT TO BE OPTICALLY MEASURED, AND COORDINATE MEASURING DEVICE
PROCÉDÉ POUR DÉTERMINER UNE ARÊTE D'UN OBJET SUR LEQUEL DOIT ÊTRE RÉALISÉE UNE MESURE OPTIQUE ET APPAREIL DE MESURE DE COORDONNÉES

(30) Priorität: 18.09.2007 DE 102007045277
(43) Veröffentlichungstag der Anmeldung: 02.06.2010
(73) Patentinhaber: Technische Universität Ilmenau, 98693 Ilmenau (DE)
(72) Erfinder: TÖPFER, Susanne, 06577 Etzleben (DE); LINSS, Gerhard, 98529 Suhl (DE); ROSENBERGER, Maik, 98744 Cursdorf (DE)
(74) Vertreter: Engel, Christoph Klaus
(86) Internationale Anmeldenummer: PCT/EP2008/062048
(87) Internationale Veröffentlichungsnummer: WO 2009/037181

(56) Entgegenhaltungen:
- WO-A-02/084215

## Beschreibung

Die vorliegende Erfindung betrifft ein Verfahren zur Bestimmung einer Kante eines optisch zu vermessenden Objektes. Ein typischer Anwendungsfall ist die Bestimmung eines Kantenortes bei Auflichtbeleuchtung, beispielsweise in der optischen Koordinatenmesstechnik oder beim Einsatz von Bildverarbeitung für die Längenmesstechnik. Gegenstand der Längenmesstechnik ist die Messung geometrischer Merkmale. Die Messung geometrischer Merkmale bei Auflichtbeleuchtung erfolgt durch die Auswertung der aufgenommenen Reflexionsbilder. Die Erfindung betrifft im Weiteren ein Koordinatenmessgerät.

In der optischen Längenmesstechnik sind Verfahren zur subpixelgenauen Kantenortbestimmung seit langem bekannt. Der Kantenort beschreibt dabei die Lage einer Kante in einem Grauwertbild, die stark von der eingesetzten Optik und Beleuchtung abhängig ist. Letzteres gilt insbesondere bei Messungen im Auflicht.

Zur Bestimmung des Kantenortes werden je nach Anwendungsfall verschiedene Kantenortkriterien angewendet. Die meisten Kantenortkriterien wurden jedoch für Messungen im Durchlicht, also für Messungen an Schattenbildern, entwickelt und erprobt. Beim Auftreten von Störreflexionen, wie sie für Auflichtbeleuchtung typisch sind, kann folglich nicht unterstellt werden, dass die Kantenortkriterien fehlerfrei funktionieren und den wahren Kantenort finden. Der im Auflicht gemessene Kantenort ist somit mit einer wesentlich höheren Unsicherheit behaftet als bei Messungen im Durchlicht. Ferner kann in seltenen Fällen ein Versagen des Kantenortkriteriums auftreten, beispielsweise wird kein Kantenort gemessen oder der gemessene Kantenort liegt augenscheinlich neben dem wahren Kantenort, so dass der Bediener die Messung mit dem jeweiligen Kantenortkriterium abbrechen muss.

In der DE 102 15 135 A1 wird ein aktives Verfahren beschrieben, bei dem mit Hilfe einer Rückkopplung der aktiven Steuergrößen eine Optimierung des Kantenkontrastes erreicht werden soll. Dabei wird aus einer Bildfolge, die mit einer steuerbaren Beleuchtungseinheit (Steuergröße Intensität, Einstrahlwinkel) gewonnen wird, eine Hilfsgröße für Werkstückeigenschaften errechnet, die dann als eine Rückkoppelgröße bei einer automatischen Einstellung des Bildkontrastes genutzt wird. Ebenso wird der Fokus als Steuergröße eingesetzt. Ziel ist es dabei, mit Hilfe der automatischen Reglung von Fokus und Beleuchtung, den messtechnisch günstigsten Kontrast in der Messszene zu erreichen. Eine nicht optimierbare Messszene führt zu einem Abbruch der Optimierung. Eine Filterung, insbesondere der interessierenden Signalflanke, wird nicht vorgenommen. Vielmehr wird ein objektiviertes Kantenortkriterium erwähnt, das sich aus der Summenbildung der Einzelkriterien ergibt. Auch hierbei werden Standardkriterien genannt, deren Eingangsgrößen (Intensitätsverläufe) aus der Optimierungsrechnung entstammen.

Das in der DE 198 25 829 A1 beschriebene Verfahren dient zur Optimierung der optischen Antastung bezüglich des Pixelrasters einer CCD-Matrix. Für die Antastung selbst werden bekannte Antastverfahren gewählt. Nach der Antastung in einer nicht dem Pixelraster entsprechenden Ausrichtung wird mit Hilfe von Koordinatentransformation das Werkstück oder die CCD-Matrix orthogonal zum Intensitätsübergang gedreht. Eine Vorfilterung eines möglichen, nichtstabilen Kantenübergangs wird nicht vorgenommen.

Die US 2005/0207655 A1 zeigt ein System, bei welchem die Verrechnung von Bilddaten und die Rückkopplung zur Bildaufnahme erfolgen. Die Rückkopplung erfolgt hierbei direkt an ein Sensorsystem, das die Parameter der Sensoreinheit verändert. Der Algorithmus ist nicht in der Lage, einen Eingriff am Sensor vorzunehmen, um so einen optimalen Kantenkontrast zu ermitteln. Weiterhin handelt es sich bei dem Verfahren um eine Bilderkennung, bei der in Rückkopplung mit einem Klassifikationsprozessor und einem Imageprozessor eine Merkmalsextraktion erfolgen soll. Eine genaue Beschreibung der Bilddatenabstimmung bzw. Filterung ist nicht angegeben. Gegenstand dieser Druckschrift ist damit keine spezifische Datenvorbereitung (Filterung der charakteristischen Signalflanke) für die Kantenortbestimmung.

Gemäß der DE 103 40 363 A1 soll mit Hilfe statistischer Kenngrößen eine optimale Einstellung der Einflussgrößen Beleuchtung, Fokus, Bildsensor und Auswertung erreicht werden. Dies erfordert wiederum eine Rückkopplung der Zielgrößen auf Basis statistischer Versuchsplanung.

In der DE 103 26 032 A1 wird ein Verfahren vorgestellt, das den Selbsttest eines CCD-Kamerasensors ermöglicht. Der Selbsttest wird dabei an einer Kante, die aus einem Licht-Schattenbild besteht durchgeführt. Das Verfahren verläuft ohne Benutzerinteraktion.

In der DE 103 26 031 A1 ist ein Verfahren beschrieben, bei dem eine Histogramm basierte, adaptive Multikantenerkennung durchgeführt wird. Dabei wird innerhalb eines Suchstrahls ein wandernder Testbereich aufgespannt, der ausgewertet wird. Das gesamte Verfahren basiert auf der Modellannahme, dass das Histogramm der Intensitätswerte zweigipfelig ist und einer Gaußverteilung entspricht. Dabei repräsentiert der eine Gipfel den Hintergrund und der andere Gipfel das Messobjekt.

In der DE 102 42 852 A1 ist ein Verfahren beschrieben, welches den Einfluss von Störsignalen vor der Formelementberechnung minimiert. Dabei werden Ausgleichsverfahren mit Erkennungsverfahren kombiniert. Es liegt hierbei eine Filterung der Eingangskoordinaten vor. Die Eingangsgrößen sind Eingangskoordinaten, die aus der Auswertung eines Intensitätsübergangs mit Hilfe von Kantenortkriterien ermittelt wurden. Die Filterung erfolgt also bereits nach der Koordinatenextraktion bzw. nach der Kantenortantastung. Weiterhin wird zur Filterung der Störsignale eine Transformation in den Hough-Raum vorgenommen, um dort die Filterung, respektive die Erkennung vorzunehmen.

In der US 2007/0183666 A1 wird das Problem aufgegriffen, dass verschiedene Messprogramme, insbesondere die Formelementberechnung, bei verschiedenen Herstellern unterschiedliche Kantenpositionen berechnen. Diese genannten Abweichungen einzelner Berechnungsmethoden werden hierbei auf die Berechnungsfehler bei Subpixelverfahren zurückgeführt, bei denen die Ausrichtung der Suchstrahlen bezüglich des Pixelbildes ungünstig ist. Das beschriebene Verfahren greift in die Ausrichtung der Suchstrahlen (und der daraus resultierenden Intensitätsübergänge) ein. Weiterhin wird der Fehler betrachtet, der entsteht, wenn bei der Ausrichtung der Suchstrahlen im Subpixelbereich die geometrischen Mittelpunkte der Pixel genutzt werden. Hierfür wird eine Neuberechnung mit Hilfe beschriebener Berechnungsmethoden gezeigt, die die wirkliche geometrische Lage auf der Fläche eines einzelnen Pixels besser beschreibt. Jedoch wird hierbei keine Suche einer charakteristischen Signalflanke für ein Kantenortkriterium vorgenommen, sondern eine geometrische Korrektur der Pixelpositionen im Subpixelbereich berechnet.

Stand der Technik ist die Nutzung einer Standardeinstellung in Form eines Kantenortkriteriums, welches in den meisten Fällen sehr gute Messergebnisse geliefert hat [Metronics: QC5200 Series User's Guide: Video Edge Detection Systems. Metronics part number 11A10562, June 2005. USA: Metronics Inc, 2005, Seite 80 - 81]. Versagt dieses Kantenortkriterium an einem Messobjekttyp, versucht der Bediener, andere Kantenortkriterien zu nutzen.

Bei stark gestörten Messszenen, nachfolgend als schwierige Messbedingungen bezeichnet, erfolgt die Messung mit der Korrelation zu einem vorgegebenen Signalverlauf [EP 1 191 481 A2]. Allerdings liefert diese Methode bei starken Störungen keine sicheren Ergebnisse. Eine wesentliche Schwierigkeit dabei ist die Wahl eines geeigneten Referenzmusters. Bei der Kantendetektion fließen alle Intensitätswerte inklusive aller Störreflexionen ein. Diese Methode kann bei einer optimalen Parametereinstellung exzellente Messergebnisse liefern, aber sie erfordert umfangreiches Wissen vom Bediener.

Aus dem Stand der Technik sind weitere verschiedene Verfahren zur optischen Messung geometrischer Merkmale unter schwierigen Messbedingungen beschrieben. So wird z.B. in der WO 02/084215 A1 ein Verfahren zur Einstellung des Kantenortkriteriums mit einer minimalen Antastabweichung vorgestellt, bei dem mehrere verschiedene Kantenortkriterien kombiniert werden, um eine gewichtete Kantenortposition zu bestimmen. Typischerweise resultiert die Kombination mehrerer Einzelverfahren jedoch häufig in einer erhöhten Messunsicherheit.

Um eine Kantenortbestimmung unter schwierigen Messbedingungen zu erlauben, existiert in einigen am Markt befindlichen Softwarepaketen für optische Koordinatenmessgeräte oder Bildverarbeitungssysteme für die Geometriemessung die Einstelloption "weiche Kante", beispielsweise in der MeasureMind3D Messsoftware der OGP Messtechnik GmbH [OGP: MeasureMind3D Multisensor Premium Metrology Software. USA: OGP Inc, 2005] und in der Messsoftware Quadra-Chek vorhanden [Metronics: QC5200 Series User's Guide: Video Edge Detection Systems. Metronics part number 11A10562, June 2005. USA: Metronics Inc, 2005, Seite 124 - 126]. Die manuell vom Bediener einstellbare Option "weiche Kante" ist besonders für Messungen von Kanten mit einem niedrigen Kontrast gedacht. In Quadra-Chek kann der Bediener den erforderlichen Minimalkontrast an der Kante ebenfalls manuell einstellen. Im "Erste Kante"-Modus von Quadra-Chek wird die erste Kante, die den eingestellten Minimalkontrast besitzt, gemessen. Diese Option ist speziell für enge bzw. dicht beieinander liegende Merkmale gedacht.

Ein alternatives Verfahren zur Kantenantastung in stark gestörten Messszenen (schwierige Messbedingungen) basiert auf der Fusion mehrerer, bei unterschiedlicher Beleuchtung aufgenommener Bilder [Wiegers, L.; Pfeifer, T.: Automatisierte Bild- & Beleuchtungsoptimierung in der technischen Auflichtsichtprüfung. In: Tagungs-CD des 47. Internationalen Wissenschaftlichen Kolloquiums (IWK), TU Ilmenau, 2002]. Dabei stehen Messobjekt und Bildaufnahmesystem fest. Die Lichtquelle ist beweglich und kann unterschiedliche Azimut- und Elevationswinkel einnehmen. Das ist prinzipiell vergleichbar mit einer Beleuchtung aus n Lichtquellen. Das Verfahren beruht auf der Aufnahme einer Folge von Bildern bei unterschiedlichen Beleuchtungseinstellungen. Die Einzelbilder werden mittels Sobel-Filterung in Kantenbilder transformiert. Ziel des Verfahrens ist es, mittels Bildfusion ein Kantenbild zu generieren, welches nur reale und keine virtuellen Kanten enthält. Virtuelle Kanten sind Kanten, die infolge von Schattenwürfen oder Reflexionen im Bild entstehen und somit in Abhängigkeit von der jeweiligen Beleuchtung im Bild stark wandern. Im Unterschied dazu existieren reale Kanten tatsächlich auf dem Messobjekt, beispielsweise als Körperkanten oder Materialübergänge. Anwendungsgebiet dieses Verfahrens ist die technische Auflichtsichtprüfung, beispielsweise die Verschleißmessung an Fräswerkzeugen [Wiegers, L.: Bild- und Beleuchtungsoptimierung zur automatisierten Verschleißmessung an Fräswerkzeugen. RWTH Aachen, Dissertation, ISBN 978-3826593246, Shaker Verlag, 2001, Seite 116 - 123 und 142 - 145]. Dieses Verfahren ist für die optische Präzisionslängenmesstechnik ungeeignet, da mit binarisierten Kantenbildern gearbeitet wird, die keine subpixelgenaue Antastung, sondern maximal die pixelgenaue Antastung erlauben.

Ein weiteres Verfahren zur Messung unter schwierigen Messbedingungen ist der Einsatz von Schwarzfiltern, um Störungen durch Oberflächenstrukturen zu unterdrücken. Das Schwarz-Filter wirkt entgegengesetzt zum Weiß-Filter. Es entfernt kleinere helle Punkte/Flächen innerhalb einer dunklen Fläche. Beispiel: Bei Messungen mit kombinierter Auflicht- und Durchlichtbeleuchtung oder reiner Auflichtbeleuchtung werden auch Konturen erkannt, die durch Kratzer in der metallischen Oberfläche entstehen. Ein Schwarz-Filter entfernt die hellen Flächen, die gewünschte Außenkontur kann präzise gemessen werden [Werth: Anwenderhandbuch WinWerth - ab Version 7.27.010. Nummer A691d, Giessen: Werth Messtechnik GmbH, 2001., Seite 92 - 99].

Ein ähnliches, manuell einstellbares Filterverfahren zur Störunterdrückung ist in der Software QVPAK von Mitutoyo enthalten [Mitutoyo: Kantenerkennung. Internetlink, Download am 07.04.2007, S. 4 und 5]. Das Verfahren basiert auf der Anwendung eines Mittelwertfilters auf alle Grauwerte. Dieses spezielle Verfahren führt jedoch zu einer Änderung des Signalverlaufs im Bereich der Kante. Dadurch treten unerwünschte Messabweichungen auf.

Ein Verfahren, welches ebenfalls das Ziel verfolgt, Störungen durch Oberflächenstrukturen zu unterdrücken, ist die Textur- und Helligkeitsanalyse [Mitutoyo: Möglichkeiten der Software QVPAK. Internetlink, Download am 07.04.2007, S. 3]. Kern des Verfahrens ist im ersten Fall die Analyse der Textur. An der Stelle, an der die Textur wechselt, befindet sich die zu messende Kante. Dabei muss kein Helligkeitsunterschied vorliegen. Bei den meisten Kanten liegt jedoch ein Helligkeitsunterschied vor, so dass die zweite Methode zum Einsatz kommt. Durch die Analyse der Helligkeit der Oberflächenstruktur rechts und links von der Kante kann die Kante auch bei sehr geringen Helligkeitsunterschieden gemessen werden. Die Beschreibung in [Mitutoyo: Möglichkeiten der Software QVPAK. Internetlink, Download am 07.04.2007, S.3] gibt jedoch keine Auskunft, ob die Textur- und Helligkeitsanalyse vollständig automatisiert abläuft oder erst vom Bediener manuell eingestellt werden muss.

Alle diese Lösungsansätze sind für die hochpräzise Antastung im Auflicht ungeeignet. Das Bild vom Messobjekt ist bei Messungen im Auflicht mit zahlreichen Störeinflüssen behaftet. Durch das Auftreten von diffuser, gerichteter und einer Mischung aus beiden Reflexionsarten enthält das Bild nicht nur die zu messende Kante, sondern auch ein Abbild der Oberflächeneigenschaften des Messobjektes sowie gegebenenfalls virtuelle Kanten. Je nach Rauheit der Messobjektoberfläche und vorhandenen Bearbeitungsspuren treten besonders viele Störreflexionen, die sich als besonders helle und teilweise überstrahlte Gebiete im Bild äußern [Nehse, U.: Beleuchtungs- und Fokusregelungen für die objektivierte Präzisionsantastung in der Koordinatenmesstechnik. Technische Universität Ilmenau, Dissertation, ISBN 978-3828812079, Tectum Verlag, 2001, Seite 31 - 33 und 74 - 75]. Diese Störreflexionen beeinflussen das Messergebnis je nach vorliegenden Messobjekteigenschaften erheblich. Bei den oben erläuterten Verfahren fließen bei der Bestimmung des Kantenortes alle Intensitätswerte inklusive aller Störreflexionen ein. Es erfolgt keine Trennung zwischen relevanter Information (= Intensitätswerte der Kante = Nutzsignal) und gestörten Informationen (= Intensitätswerte der umliegenden Oberfläche = Störsignal). Es wird lediglich versucht, das Störsignal durch verschiedene Methoden, beispielsweise Filterung, zu unterdrücken oder zu charakterisieren, beispielsweise Texturanalyse.

Zusammenfassend können die nachfolgend erläuterten Ausprägungen von schwierigen Messbedingungen, die vorrangig bei Auflichtbeleuchtung auftreten, unterschieden werden:
- sehr geringer Kontrast an der zu messenden Kante in der Messszene,
- starke Störungen im Signalverlauf durch Oberflächenstrukturen oder Bearbeitungsspuren an der Oberfläche,
- Auftreten von mehreren Kanten dicht nebeneinander, beispielsweise durch nicht ideal rechtwinklige Körperkanten (beispielsweise angefaste oder abgerundete Körperkanten) oder zu viele Details in der Messszene,
- Auftreten virtueller Kanten (Kanten, die keiner Körperkante oder keinem Materialübergang entsprechen und nur aus Reflexionen oder Schattenwürfen resultieren),
- Auftreten von Spitzlichtern (punktuelle direkte Reflexionen, die in kleinen überstrahlten Bildbereichen resultieren).
Die verschiedenen Ausprägungen können einzeln oder in Kombination miteinander auftreten.

Aufgabe der vorliegenden Erfindung ist es deshalb, für die optische Längenmesstechnik ein automatisierbares, bedienerunabhängiges Verfahren und ein Koordinatenmessgerät zur subpixelgenauen Bestimmung des Kantenortes bei schwierigen Messbedingungen, welche insbesondere durch Auflichtbeleuchtung verursacht werden, bereitzustellen.

Erfindungsgemäß gelingt die Lösung dieser Aufgabe mit einem Verfahren gemäß dem Patentanspruch 1 und durch ein Koordinatenmessgerät gemäß dem nebengeordneten Anspruch 10. Vorteilhafte Ausgestaltungen des Verfahrens und des Koordinatenmessgerätes sind in den obhängigen Ansprüchen angegeben.

Das erfindungsgemäße Verfahren dient zur Bestimmung einer Kante eines optisch zu vermessenden Objektes. Das Verfahren beruht auf dem Prinzip der Trennung von Stör- und Nutzsignal. Erst danach erfolgt die Kantenortbestimmung.

Bei dem erfindungsgemäßen Verfahren wird zunächst ein Bild des optisch zu vermessenden Objektes aufgenommen, um die Richtung eines optischen Antastens in eine Richtung von einem weniger verrauschten Gebiet des Bildes zu einem stärker verrauschten Gebiet des Bildes festzulegen. In einem weiteren Schritt sind statistische Kenngrößen, nämlich Standardabweichung und Spannweite des weniger verrauschten Gebietes des Bildes zu.bestimmen. Erfindungsgemäß erfolgt ein schrittartiges Antasten in die festegelegte Richtung, wobei bei jedem Schritt Standardabweichung und Spannweite für einen während dieses Schrittes zu untersuchenden Bereich des Bildes bestimmt werden. Die Kante wird festgestellt, wenn während des schrittartigen Antastens Standardabweichung und Spannweite eines bei einem der Schritte des Antastens zu untersuchenden Bereiches des Bildes von Standardabweichung und Spannweite des weniger verrauschten Gebietes des Bildes abweichen. Für das optische Antasten ist keine Bewegung eines optischen Sensors, beispielsweise einer Kamera notwendig. Das Antasten kann vollständig durch einen Rechner ausgeführt werden. Das erfindungsgemäße Verfahren kann nach einer Ortsveränderung des optischen Sensors wiederholt werden.

Das erfindungsgemäße Verfahren ist vollständig automatisierbar und funktioniert ohne jeglichen Eingriff eines Bedieners.

Das erfindungsgemäße Koordinatenmessgerät dient der optischen Vermessung eines Objektes und es umfasst zunächst eine Beleuchtung zum Beleuchten des zu vermessenden Objektes. Weiterhin besitzt das Koordinatenmessgerät einen optischen Sensor, beispielsweise eine Kamera zur optischen Aufnahme des beleuchteten Objektes. Der optische Sensor kann mit einer Verfahrvorrichtung verfahren werden. Im Weiteren umfasst das Koordinatenmessgerät eine Auswerteeinheit zum Auswerten der Aufnahmen des optischen Sensors. Die Auswerteeinheit ist zur Ausführung des erfindungsgemäßen Verfahrens konfiguriert. Die Auswerteeinheit kann als integraler Bestandteil einer Steuer- und Auswerteeinheit ausgebildet sein, welche auch zum Steuern der Verfahrvorrichtung dient.

Die Erfindung wird im Folgenden unter Bezugnahme auf die Zeichnung näher erläutert. Es zeigen:
- Fig. 1:: Prinzipieller Aufbau eines erfindungsgemäßen Koordi- natenmessgerätes, auf dem ein erfindungsgemäßes Verfahren ausgeführt werden kann;
- Fig. 2a:: Rein schematischer Aufbau für die optische Messung geometrischer Merkmale an Werkstücken mit Auflicht- und Durchlichtbeleuchtung;
- Fig. 2b:: Rein schematischer Aufbau für die optische Messung geometrischer Merkmale an Werkstücken, die nur im Auflicht gemessen werden können;
- Fig. 3:: Schritte einer bevorzugten Ausführungsform des erfin- dungsgemäßen Verfahrens für die Messung geometrischer Merkmale unter schwierigen Messbedingungen;
- Fig. 4a:: Rein schematische Darstellung einer suchstrahlbasier- ten Antastung im Kamerabild, das mit dem Messaufbau nach einer der Fig. 2 aufgenommen wurde;
- Fig. 4b:: Rein schematische Darstellung einer vollflächigen Antastung im Kamerabild, das mit dem Messaufbau nach einer der Fig. 2 aufgenommen wurde;
- Fig. 5:: Ablaufplan für die Bestimmung der Signalflanke;
- Fig. 6a:: Idealtypischer Signalverlauf mit sehr gutem Kontrast an der Kante (Iₘₐₓ = maximale Intensität);
- Fig. 6b:: Idealtypischer Signalverlauf mit sehr geringem Kon- trast an der Kante (Iₘₐₓ = maximale Intensität);
- Fig. 6c:: Typischer Signalverlauf bei Auflichtbeleuchtung an Messobjekten mit einer abfallenden Ebene (links) und einer starken Oberflächenstruktur (rechts);
- Fig. 6d:: Typischer Signalverlauf bei Auflichtbeleuchtung an Messobjekten mit einer stark ausgeprägten Oberflä- chenstruktur (rechte Hälfte), beispielsweise Bearbei- tungsspuren an metallischen Werkstücken;
- Fig. 6e:: Typischer Signalverlauf bei Auflichtbeleuchtung an Messobjekten mit einer sehr geringen Höhenausdehnung (in z-Richtung), beispielsweise wenige Nano- oder Mikrometer;
- Fig. 6f:: Typischer Signalverlauf bei Auflichtbeleuchtung an Messobjekten mit einer reinen Strukturkante, die sich als Trennlinie zwischen einer stark ausgeprägten Oberflächenstruktur (rechte Hälfte) und einer weniger stark ausgeprägten Oberflächenstruktur (linke Hälfte) ergibt;
- Fig. 6g:: Typischer Signalverlauf bei Auflichtbeleuchtung an Messobjekten mit abgerundeten oder angefasten Körper- kanten; und
- Fig. 7:: Prinzipieller Ablaufplan für die Kantenantastung mit Bildsensoren bei einer optischen Messung.

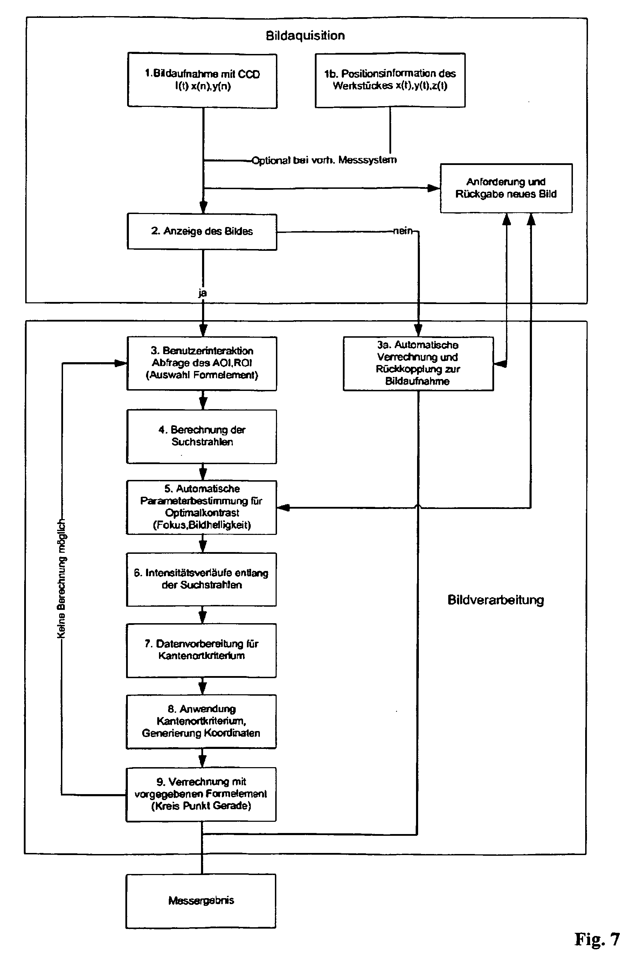

Zum besseren Verständnis der Erfindung wird zunächst auf Fig. 7 verwiesen, welche den prinzipiellen Ablauf einer optischen Messung im Sinne der optischen Messtechnik darstellt. Die vorliegende Erfindung ordnet sich in diesem Ablaufplan in Schritt 7 ein.

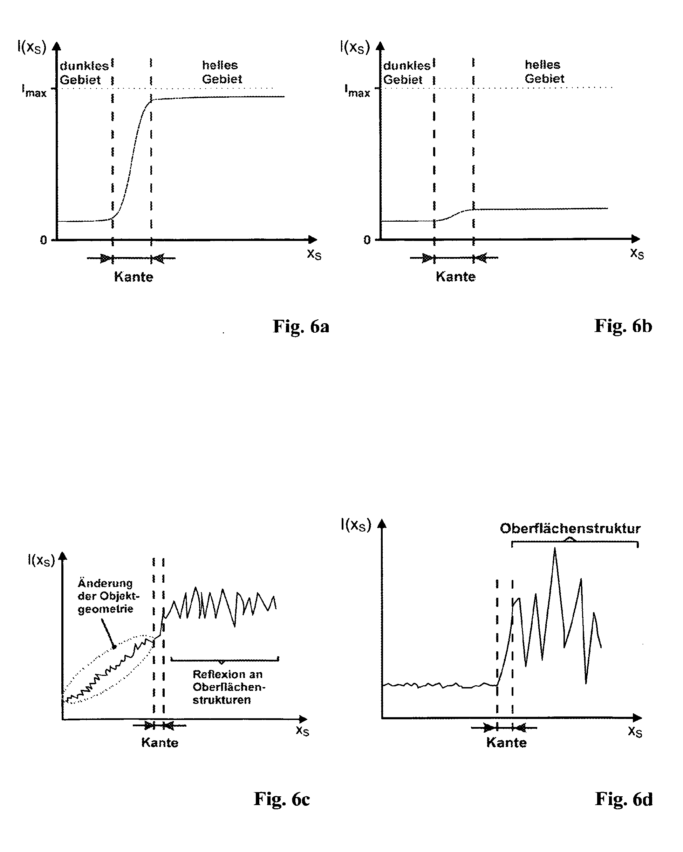

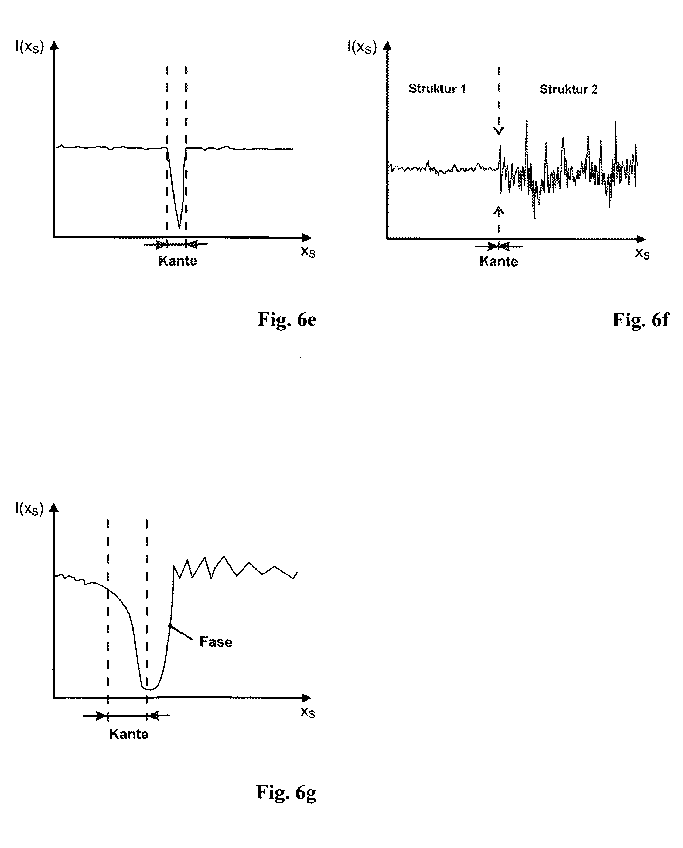

Die oben bereits erwähnten schwierigen Messbedingungen liegen dann vor, wenn ungünstige Beleuchtungsverhältnisse aufgrund optisch schwieriger Werkstoffe und Oberflächen vorherrschen. Eine physikalische Beschreibung von optisch schwierigen Werkstoffen und Oberflächen umfasst das Vorliegen folgender physikalischer Gegebenheiten:
- Werkstoff mit hohem Transmissionsgrad
   z.B. Antastung einer Kante an einem transparenten Messobjekt (charakteristischer Signalverlauf ähnlich zu Fig. 6e)
- Werkstoff mit hohem Absorptionsgrad
   z.B. Antastung einer angefasten Kante auf einem schwarzen, mikrostrukturierten Spritzgußteil bei Auflichtbeleuchtung (charakteristischer Signalverlauf: Fig. 6g)
- Mischung aus diffuser und gerichteter Reflexion
   Die Messobjektoberfläche besitzt folglich stochastisch verteilte, stark schwankende Reflexionsgrade unter Annahme eines punktförmigen Reflexionsmodells (beispielsweise bidirektionale Reflektanzverteilungsfunktion).
   z.B. Messung einer Kante an einem gefrästen Metallteil bei Auflichtbeleuchtung (charakteristischer Signalverlauf: Fig. 6d)

In den genannten Fällen (Fig. 6b bis g) hat dann beispielsweise der Signalverlauf des Intensitätsüberganges häufig einen zu geringen Kontrast und starke Rauschanteile bzw. Signalschwankungen durch die Messobjektoberfläche. Das hat erhebliche Konsequenzen für den Schritt 7 in Fig. 7 - Datenvorbereitung für Kantenortkriterium.

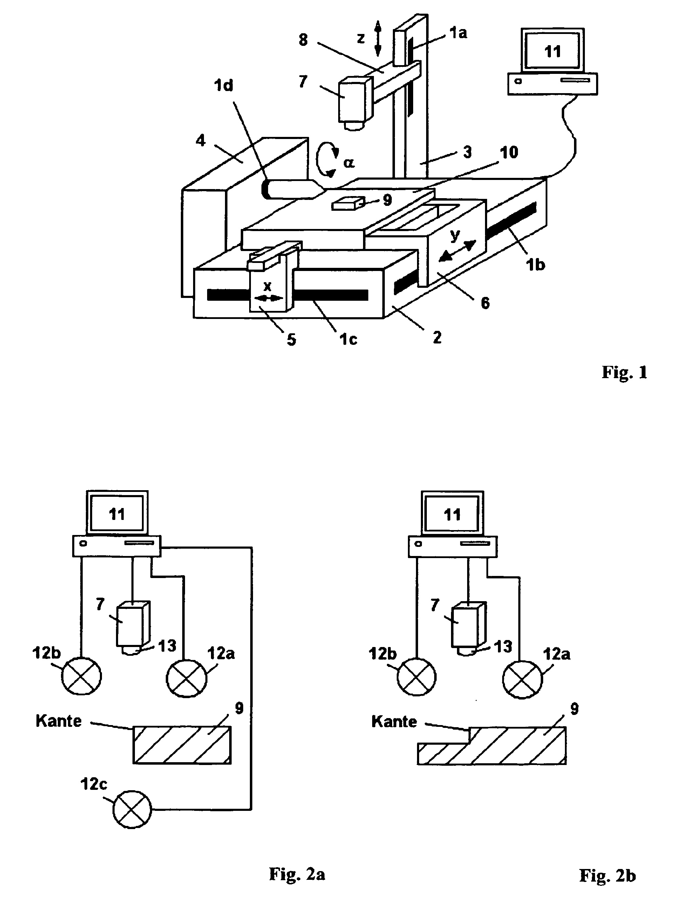

Fig. 1 zeigt beispielhaft den Aufbau eines erfindungsgemäßen Koordinatenmessgerätes (KMG), an dem das erfindungsgemäße Verfahren ausgeführt werden kann. Das Koordinatenmessgerät ist ein Gerät mit mehreren Antrieben 5, 6 und 8, deren jeweilige Position mit Hilfe von Maßstäben 1a, 1b und 1c bestimmt werden kann. Dabei wird die Position der jeweiligen Schlitten der Antriebe 5, 6 und 8 über das Auslesen eines nicht sichtbaren Lesekopfes, der den zugehörigen Maßstab abtastet, ermittelt. Optional kann das Koordinatenmessgerät über eine Drehachse 4 verfügen, deren Ausrichtung über eine Maßverkörperung 1d bestimmt wird. Die Antriebe sind an einem Grundgestell 2 befestigt oder im Fall des z-Antriebes 8 an einer z-Säule 3.

Ein zu vermessendes Werkstück 9 ist entweder in der Drehachse 4 eingespannt oder auf einem Messtisch 10 befestigt. Als Messsensorik ist ein Bildsensor 7 vorhanden, der zusätzlich über Beleuchtungseinrichtungen und ein entsprechendes Abbildungssystem verfügt. Die Messsensorik kann relativ zum Werkstück 9 in den vier Koordinaten x, y, z und α bewegt werden. Die Messsensorik kann dabei aus einem einzigen Sensor oder aus mehreren unterschiedlichen Sensoren (Multisensorik) bestehen. Der Bildsensor (7) kann durch eine Grauwertkamera oder durch eine Farbkamera gebildet sein. Für die Steuerung des Koordinatenmessgerätes sowie die Auswertung der von den Maßstäben 1a, 1b, 1c und 1d ausgelesenen Positionen und Ausrichtung dient ein Rechner 11. Er dient weiterhin der Auswertung der vom Bildsensor 7 gelieferten Bildinformation.

Das erfindungsgemäße Verfahren kann an allen Koordinatenmessgeräten angewendet werden, bei denen mindestens ein Bildsensor als Teil der Messsensorik vorhanden ist.

Anstelle eines Koordinatenmessgerätes kann für einfachere Aufgaben, beispielsweise die Erfassung der Geometrie von Flachteilen in der Serienproduktion, ein viel einfacheres Messgerät mit nur zwei oder einer Bewegungsachse oder ohne jegliche Relativbewegung zwischen Bildsensor und Werkstück eingesetzt werden.

Fig. 2 zeigt schematisch die wesentlichen Komponenten die für die Durchführung des erfindungsgemäßen Verfahrens notwendig sind. Eine typische Kante ist in der Profilansicht des Messobjektes 9 dargestellt. Die Beleuchtung 12a, 12b und 12c dient je nach Charakteristik des Werkstücks 9 zur Beleuchtung der Kante. Durch ein Abbildungssystem 13 wird ein Bild auf der Sensormatrix des Bildsensors 7 abgebildet und von diesem aufgenommen. Diese Bilddaten werden zum Rechner 11 geliefert und dort ausgewertet. In Fig. 2a ist beispielhaft die Messung einer Kante dargestellt, die sowohl im Auflicht, durch die Beleuchtung 12a und 12b beleuchtet, als auch im Durchlicht, durch die Beleuchtung 12c beleuchtet, gemessen werden kann. In Fig. 2b ist beispielhaft die Messung einer Kante dargestellt, die durch die Werkstückgeometrie bedingt nur im Auflicht, durch die Beleuchtung 12a und 12b beleuchtet, gemessen werden kann.

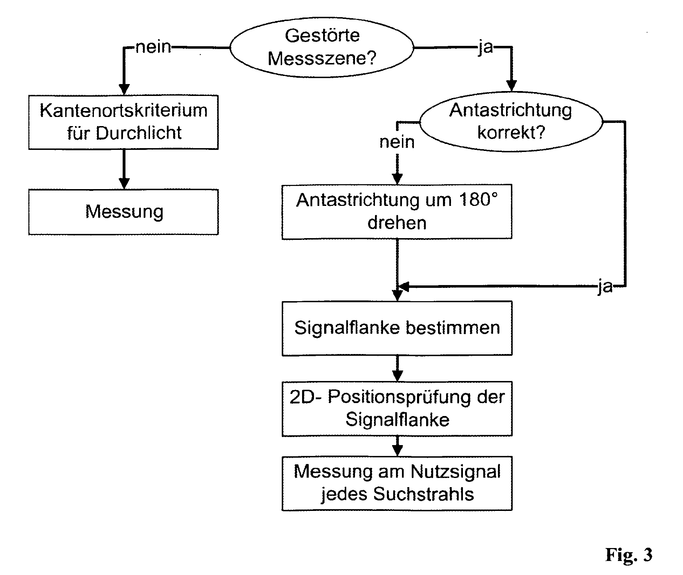

Fig. 3 zeigt den prinzipiellen Ablauf einer bevorzugten Ausführungsform des erfindungsgemäßen Verfahrens. Nach der Prüfung, ob eine gestörte Messszene (schwierige Messbedingungen) vorliegt, wird die Antastrichtung geprüft und gegebenenfalls angepasst. Anschließend wird aus dem Signalverlauf die Signalflanke, welche zur tatsächlichen Kante gehört lokalisiert. Hierfür ist die Signalflanke zweidimensional zu analysieren. Nach der Prüfung der zweidimensionalen Nachbarschaftsbeziehungen wird für die präzise Bestimmung des Kantenortes nachfolgend nur die ausgewählte Signalflanke verwendet. Dadurch wird die Trennung zwischen Stör- und Nutzsignal realisiert.

Bei Messungen unter schwierigen Messbedingungen, beispielsweise im Auflicht, hängt die erreichbare minimale Unsicherheit des Kantenortes nicht nur vom Kantenortkriterium ab, sondern auch von der Auswertung der zur Strukturkante gehörigen Signalflanke. Da Reflexionsbilder sehr starke Störungen enthalten können, sind häufig mindestens zwei Signalflanken in unmittelbarer Nachbarschaft vorhanden. Von diesen Signalflanken entsteht jedoch nur eine an der eigentlichen Strukturkante, wohingegen die zweite in der Regel an dem Übergang einer Phase oder Abrundung (Fig. 6g) und der Oberfläche des Messobjektes entsteht (Fig. 6d).

Durch die automatische Festlegung der Suchstrahlrichtung wird dieses Problem in der Regel vermieden, da nur die erste Signalflanke, die der Strukturkante entspricht, ausgewertet wird. Für die präzise Bestimmung des Kantenortes wird anschließend anhand der ermittelten Kantengüte das am besten geeignete Kantenortkriterium ausgewählt.

Mit dem erfindungsgemäßen Verfahren wird bevorzugt ein eindimensionaler Intensitätsverlauf I = f(xₛ) ausgewertet und der Intensitätsübergangsbereich identifiziert, der der realen Kante entspricht (Fig. 6d). Durch dieses Verfahren können die negativen Auswirkungen von Störreflexionen und die Antastung von virtuellen Kanten nahezu gänzlich vermieden werden.

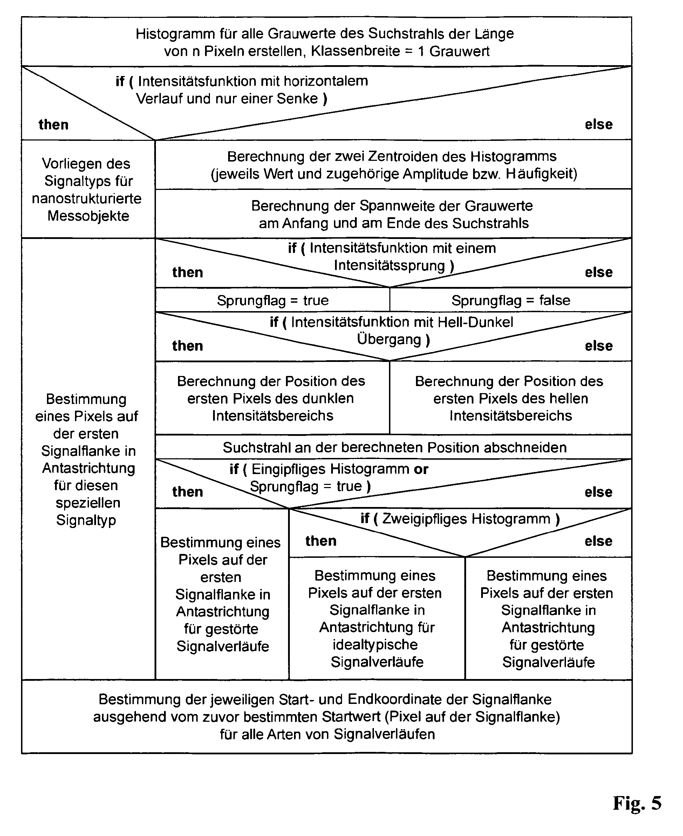

Grundprinzip des erfindungsgemäßen Verfahrens ist die Anwendung statistischer Methoden. Ziel ist es, aus den nicht eindeutigen Signalverläufen den Signalanteil des Ortes der wirklichen Kante zu finden und aus dem Signalverlauf herauszufiltern. In Fig. 5 ist ein Ablaufplan für die Bestimmung der Signalflanke dargestellt, wie er bei einer bevorzugten Ausführungsform des erfindungsgemäßen Verfahrens durchlaufen wird. Neben der Anwendung statistischer Methoden wird zwischen verschiedenen charakteristischen Grundtypen von Signalverläufen unterschieden. Als Ausgangsergebnis ergibt sich eine Signalflanke auf deren Intensitätsverlauf generell alle möglichen Kantenantastverfahren angewendet werden können.

Vor dem Einsatz dieses Algorithmus muss die Antastrichtung korrekt, das heißt vom weniger zum stärker verrauschten Gebiet, eingestellt worden sein. Zuerst werden die charakteristischen, statistischen Kenngrößen, nämlich Standardabweichung und Spannweite, der Intensität im Anfangsgebiet des Suchstrahls quantitativ bestimmt. Anschließend werden die Intensitätswerte der einzelnen Bildpunkte in Suchstrahlrichtung schrittweise analysiert. Sobald die statistischen Kenngrößen der betrachteten Bildpunkte signifikant von der vorherigen Teilmenge abweichen, kann man schlussfolgern, dass der zuletzt betrachtete Bildpunkt (Pixel) offensichtlich im Intensitätsübergangsbereich der Kante liegt.

Bei dieser Analyse wird bevorzugt auch berücksichtigt, ob ein Trend im Startgebiet vorliegt. Falls ein Trend vorliegt, wird der Intensitätsübergangsbereich entlang des Suchstrahls an der Stelle lokalisiert, an der erstmals eine signifikante Abweichung vom beobachteten Trend auftritt. Nach dieser Groblokalisation irgendeines Bildpunktes im Intensitätsübergangsbereich der Kante wird von diesem ausgehend in beiden Richtungen der Beginn (Startkoordinate) bzw. das Ende (Endkoordinate) des Intensitätsübergangsbereichs pixelgenau erfasst. Das Kriterium für den Beginn bzw. das Ende des Intensitätsübergangsbereichs besteht darin, dass die Intensität des nächsten Pixels, bezogen auf den betrachteten Pixel, entweder konstant ist oder ein Vorzeichenwechsel der 1. Ableitung auftritt.

Ein wesentlicher Vorteil des Verfahrens ist, dass es nicht die Anwendung von Filtern erfordert, durch welche die Messinformation verfälscht werden. Bei dem erfindungsgemäßen Verfahren wird bevorzugt lediglich eine Vorauswahl der Grauwerte, die mit einem Kantenortkriterium ausgewertet werden sollen, getroffen.

Es liegt auch im Bereich der Erfindung, dieses Verfahren mit einem oder mehreren typischen Operatoren für die Kantenerkennung zu kombinieren, um den Startwert für die Suche des Intensitätsübergangsbereichs zu generieren.

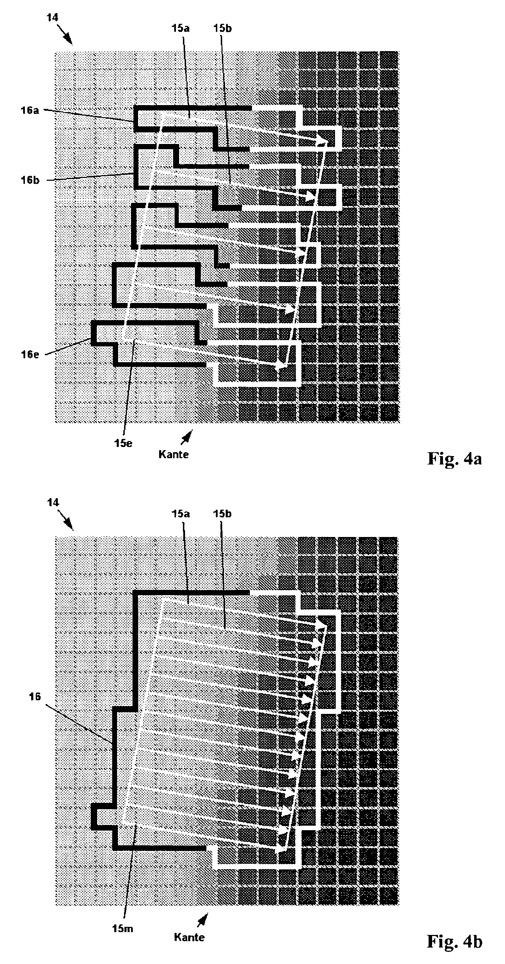

Das erfindungsgemäße Verfahren funktioniert bevorzugt suchstrahlbasiert (stichprobenartige Auswertung der Messszene mit Suchstrahlen 15a bis 15e in Fig. 4a) oder auch vollflächig (Fig. 4b). Die für die Interpolation der Suchstrahlen verwendeten, umgebenden Pixel sind in Fig. 4a durch Bereiche 16a bis 16e für die jeweiligen Suchstrahlen 15a bis 15e visualisiert. Bei der vollflächigen Antastung, dargestellt in Fig. 4b, wird ein zusammenhängender Bildbereich 16 aus einem mit dem Bildsensor 7 aufgenommenen Bild 14 ausgewertet. Es ist günstig, wenn der auszuwertende eindimensionale Intensitätsverlauf in der Bildebene senkrecht zur Tangente an die lokale Kontur steht. Dafür können gegebenenfalls Algorithmen zur automatisierten Ausrichtung des AOIs (Area of Interest = Messfeld) genutzt werden. In den Fig. 4a und 4b ist der Idealfall beispielhaft dargestellt; so sind die Suchstrahlen senkrecht zur Lage der anzutastenden Kante ausgerichtet.

Das vorgestellt erfindungsgemäße Verfahren zeichnet sich durch eine Reihe von Vorteilen aus. Zum einen erfolgt die Kantendetektion nur in dem Bereich des Bildsignals, der die Kante enthält, wobei die zahlreich vorhandenen Störgrößen bei der Kantenortbestimmung nicht berücksichtigt werden. Weiterhin ist mit dem erfindungsgemäßen Verfahren eine sehr einfache Erkennung von fehlerhaften Antastungen und somit eine sehr gute Ausreißerfilterung möglich. Die Messunsicherheit bei Messungen im Auflicht bzw. an Reflexionsbildern wird signifikant reduziert.

Nach der Bildaufnahme und der Abfrage der AOI(s) können bei ungünstigen Beleuchtungsverhältnissen oder optisch schwierigen Werkstoffen Intensitätsverläufe entstehen, wie sie in den Fig. 6c bis 6g skizziert sind. Die quantifizierenden Angaben zur Stärke der Störreflexionen ergeben sich aus den Fig. 6c bis 6g in Relation zu Fig. 6a, in der die maximale vom Bildsensor erfassbare Intensität Iₘₐₓ eingetragen ist. Die in den Fig. 6c bis 6g dargestellten Signalverläufe nutzen den Wertebereich des Bildsensors zu mindestens 90 Prozent aus. Eine alternative Betrachtungsweise zur Quantifizierung ist die Betrachtung der Form des Histogramms der Signalverläufe in den einzelnen Figuren:
- 6a): typisches zweigipfeliges Histogramm mit deutlichem Abstand zwischen beiden Gipfeln;
- 6b): typisches zweigipfeliges Histogramm mit zwei eng nebeneinander liegenden Gipfeln;
- 6c): eingipfeliges Histogramm mit einem Gipfel in den hohen Intensitätswerten (nahe Iₘₐₓ);
- 6d): eingipfeliges Histogramm mit einem Gipfel in den niedrigen Intensitätswerten;
- 6e): eingipfeliges Histogramm mit einem Gipfel in den hohen Intensitätswerten (nahe Iₘₐₓ);
- 6f): eingipfeliges Histogramm mit einem Gipfel in den mittleren Intensitätswerten;
- 6g): eingipfeliges Histogramm mit einem Gipfel in den hohen Intensitätswerten (nahe Iₘₐₓ).

Ein Fachmann ist in der Lage einen maximalen Kontrast am Kantenübergang einzustellen (Kontrast als Differenz zwischen maximalen Intensitätswert und minimalen Intensitätswert an einem Strukturübergang), jedoch werden bei entsprechenden Messobjekten die optischen Grenzen eines Bildverarbeitungssystems tangiert. Die physikalisch vorliegenden Eigenschaften eines Messobjektes, die für die Abbildung einer Kante des Messobjektes maßgeblich sind, können durch den Fachmann nicht verändert werden (siehe oben angeführte Aufzählung schwieriger Messbedingungen). Folglich liefert der Bildsensor trotz optimaler manueller Einstellung der Messparameter mehrdeutige Signalverläufe (Fig. 6c bis 6g). Dadurch liefern herkömmliche Kantenortkriterien zwar Messergebnisse, die jedoch im Vergleich zu einem Referenzsystem falsch sind bzw. mit unzulässig großen Messabweichungen behaftet sind. Unzulässig große Messabweichungen sind betragsmäßig sehr viel größer als die spezifizierte Messunsicherheit für den eingestellten Abbildungsmaßstab des optischen Antastsystems. Mit Hilfe der Vorfilterung und Angabe der Signalflanke als Eingangsgröße für das Kantenortbestimmungsverfahren nach dem erfindungsgemäßen Verfahren ist dennoch die erfolgreiche Anwendung der optischen Messung möglich. Durch das vorliegende Verfahren kann das Auftreten unzulässig großer Messabweichungen vermieden werden (Vermeidung grober Messfehler). Bei einer optimalen Voreinstellung kann sogar eine Reduktion der Messunsicherheit durch die Anwendung der Erfindung erreicht werden.

### Bezugszeichenleiste

| | | |
|---|---|---|
| 1a, 1b, 1c, 1d | - | Maßstäbe |
| 2 | - | Grundgestell |
| 3 | - | z-Säule |
| 4 | - | Drehachse |
| 5, 6, 8 | - | Antriebe |
| 7 | - | Bildsensor |
| 9 | - | Werkstück |
| 10 | - | Messtisch |
| 11 | - | Rechner |
| 12a, 12b, 12c | - | Beleuchtung |
| 13 | - | Abbildungssystem |
| 14 | - | aufgenommenes Bild |
| 15a - e | - | Suchstrahlen |
| 16a - e | - | Bildbereiche |

## Patentansprüche

1. Verfahren zur Bestimmung einer Kante eines optisch zu vermessenden Objektes (9), die folgenden Schritte umfassend:
- Aufnehmen eines Bildes (14) des optisch zu vermessenden Objektes (9);
- Bestimmen von Standardabweichung und Spannweite der Intensitätswerte von Bildpunkten eines Anfangsgebietes des Bildes (14);
- Festlegen der Richtung eines optischen Antastens in eine Richtung von einem weniger verrauschten Gebiet des Bildes (14) zu einem stärker verrauschten Gebiet des Bildes (14);
- Bestimmen von Standardabweichung und Spannweite des weniger verrauschten Gebietes des Bildes (14);
- schrittartiges Antasten in die festgelegte Richtung, wobei bei jedem Schritt Standardabweichung und Spannweite für einen während dieses Schrittes zu untersuchenden Bereich des Bildes (14) bestimmt werden; und
- Feststellen eines eine Kante des Objektes (9) repräsentierenden Bereiches des Bildes (14), wenn Standardabweichung und Spannweite eines bei einem der Schritte des Antastens zu untersuchenden Bereiches des Bildes (14) von Standardabweichung und Spannweite des weniger verrauschten Gebietes des Bildes (14) abweichen.

2. Verfahren nach Anspruch 1, **dadurch gekennzeichnet, dass** zum Feststellen des die Kante des Objektes (9) repräsentierenden Bereiches des Bildes (14) eine Signalflanke bestimmt wird, deren Startpunkt bei einer während des Antastens beginnenden Abweichung von Standardabweichung und Spannweite des zu untersuchenden Bereiches des Bildes (14) von Standardabweichung und Spannweite des weniger verrauschten Gebietes des Bildes (14) zu setzen ist, und deren Endpunkt bei einer während des Antastens endenden Veränderung von Standardabweichung und Spannweite des zu untersuchenden Bereiches des Bildes (14) zu setzen ist.

3. Verfahren nach Anspruch 2, **dadurch gekennzeichnet, dass** die Kante unter Anwendung von Kantenoperatoren für die der Signalflanke zu Grunde liegenden Standardabweichung und Spannweite ermittelt wird.

4. Verfahren nach einem der Ansprüche 1 bis 3, **dadurch gekennzeichnet, dass** Standardabweichung und Spannweite für Intensitätswerte von Bildpunkten des aufgenommenen Bildes (14) oder Bildbereiches bestimmt werden.

5. Verfahren nach einem der Ansprüche 1 bis 4, **dadurch gekennzeichnet, dass** das schrittartige Antasten mit einer Schrittweite erfolgt, die dem Abstand der Bildpunkte des aufgenommenen Bildes (14) oder Bildbereiches gleicht.

6. Verfahren nach einem der Ansprüche 1 bis 5, **dadurch gekennzeichnet, dass** das Feststellen des die Kante des Objektes (9) repräsentierenden Bereiches des Bildes (14) subpixelgenau erfolgt.

7. Verfahren nach einem der Ansprüche 1 bis 6, **dadurch gekennzeichnet, dass** zum Feststellen des die Kante des Objektes (9) repräsentierenden Bereiches des Bildes (14) weiterhin ein Kantenortkriterium angewendet wird.

8. Verfahren nach einem der Ansprüche 1 bis 7, **dadurch gekennzeichnet, dass** das schrittartige Antasten einschließlich des Feststellens eines die Kante des Objektes (9) repräsentierenden Bereiches des Bildes (14) ausgehend von weiteren Orten im weniger verrauschten Gebiet des Bildes (14) suchstrahlartig oder vollflächig wiederholt wird.

9. Verfahren nach einem der Ansprüche 1 bis 8, **dadurch gekennzeichnet, dass** das optisch zu vermessende Objekt (9) auflichtbeleuchtet wird.

10. Koordinatenmessgerät zur optischen Vermessung eines Objektes (9), umfassend:
- eine Beleuchtung (12a; 12b; 12c) zum Beleuchten des zu vermessenden Objektes (9);
- einen optischen Sensor (7) zur optischen Aufnahme des beleuchteten Objektes (9);
- eine Verfahrvorrichtung (5; 6; 8) zum Verfahren des optischen Sensors (7);
- eine Auswerteeinheit (11) zum Auswerten der Aufnahmen des optischen Sensors (7), die zur Ausführung eines Verfahrens gemäß einem der Ansprüche 1 bis 9 konfiguriert ist.

11. Koordinatenmessgerät nach Anspruch 10, **dadurch gekennzeichnet, dass** die Beleuchtung zumindest teilweise durch eine Auflichtbeleuchtung (12a; 12b) ausgeführt ist.

12. Koordinatenmessgerät nach Anspruch 10 oder 11, **dadurch gekennzeichnet, dass** die Verfahrvorrichtung durch Antriebe (5; 6; 8) gebildet ist, die jeweils in Richtung einer Koordinate (x, y, z, α) ausgerichtet sind.

13. Koordinatenmessgerät nach einem der Ansprüche 10 bis 12, **dadurch gekennzeichnet, dass** der optische Sensor (7) durch eine Grauwertkamera oder durch eine Farbkamera gebildet ist.

## Claims

1. A method for determining an edge of an object (9) to be optically measured, comprising the following steps:
- recording a picture (14) of the object (9) to be optically measured;
- determining standard deviation and range of the intensity values of pixels of a starting region of the picture (14);
- establishing the direction of an optical scan in direction from a less noisy region of the picture (14) to a more noisy region of the picture (14);
- determining standard deviation and range of the less noisy region of the picture (14);
- step-by-step scanning in the established direction, wherein for each step standard deviation and range are determined for an area of the picture (14) to be examined during this step; and
- locating an area of the picture (14) representing an edge of the object (9) if standard deviation and range of an area of the picture (14) to be examined during one of the scanning steps deviate from standard deviation and range of the less noisy region of the picture (14).

2. Method according to claim 1, **characterised in that** in order to locate the area of the picture (14) representing the edge of the object (9) a signal flank is determined the starting point of which has to be set for a deviation, beginning during scanning, of the standard deviation and range of the area of the picture (14) to be examined, from the standard deviation and range of the less noisy region of the picture (14), and the end point of which has to be set for a change, ending during scanning, in standard deviation and range of the region of the picture (14) to be examined.

3. Method according to claim 2, **characterised in that** the edge is ascertained using edge operators for the standard deviation and range on which the signal flank is based.

4. Method according to one of claims 1 to 3, **characterised in that** standard deviation and range are determined for intensity values of pixels of the recorded picture (14) or picture area.

5. Method according to one of claims 1 to 4, **characterised in that** step-by-step scanning takes place at a step width which is equal to the distance between the pixels of the recorded picture (14) or picture area.

6. Method according to one of claims 1 to 5, **characterised in that** locating the area of the picture (14) representing the edge of the object (9) takes place with sub-pixel-precise accuracy.

7. Method according to one of claims 1 to 6, **characterised in that** further an edge location criterion is used for locating the area of the picture (14) representing the edge of the object (9).

8. Method according to one of claims 1 to 7, **characterised in that** the step-by-step scanning including locating an area of the picture (14) representing the edge of the object (9), starting at further locations in the less noisy region of the picture (14), is repeated in a manner of using a search beam or for the entire area.

9. Method according to one of claims 1 to 8, **characterised in that** the object (9) to be optically measured is illuminated using incident-light illumination.

10. Coordinate measuring device for optically measuring an object (9), comprising:
- a light (12a; 12b; 12c) for illuminating the object (9) to be measured;
- an optical sensor (7) for optically recording the illuminated object (9);
- a retracting device (5; 6; 8) for retracting the optical sensor (7);
- an evaluation unit (11) for evaluating the shots taken by the optical sensor (7) and configured to perform a method according to one of claims 1 to 9.

11. Coordinate measuring device according to claim 10, **characterised in that** illumination is at least partially implemented by using an incident-light illuminator (12a; 12b).

12. Coordinate measuring device according to claim 10, **characterised in that** the retracting device is formed by drives (5; 6; 8) which are each aligned in direction of a coordinate (x, y, z, α).

13. Coordinate measuring device according to one of claims 10 to 12, **characterised in that** the optical sensor (7) is implemented by a grey scale camera or a colour camera.

## Revendications

1. Procédé de détermination d'une arête d'un objet (9) à mesurer optiquement, comprenant les étapes suivantes
- prise de vue d'une image (14) de l'objet (9) à mesurer optiquement ;
- détermination d'un écart standard et d'une envergure des valeurs d'intensité de points d'image d'une zone de début de l'image (14) ;
- définition de la direction d'un balayage optique dans une direction depuis une zone à faible bruit de l'image (14) vers une zone à bruit élevé de l'image (14) ;
- détermination d'un écart standard et d'une envergure de la zone à faible bruit de l'image (14)
- balayage par étapes dans la direction définie, dans lequel à chaque étape un écart standard et une envergure pour une zone de l'image (14) à examiner pendant cette étape sont déterminés ; et
- détection d'une zone de l'image (14) représentant une arête de l'objet (9), quand un écart standard et une envergure pendant une des étapes du balayage de la zone à examiner de l'image (14) diffèrent de l'écart standard et de l'envergure de la zone à faible bruit de l'image (14).

2. Procédé selon la revendication 1, **caractérisé en ce que** pour détecter la zone de l'image (14) représentant l'arête de l'objet (9) un flanc de signal est déterminé, dont le point de départ en présence d'un écart par rapport à l'écart standard commençant pendant le balayage et d'une envergure de la zone à examiner de l'image (14) par rapport à l'écart standard et à l'envergure de la zone à faible bruit de l'image (14) doit être réglé, et dont le point de fin en présence d'une variation prenant fin pendant le balayage d'un écart standard et d'une envergure de la zone à examiner de l'image (14) doit être réglé.

3. Procédé selon la revendication 2, **caractérisé en ce que** l'arête est déterminée en employant des opérateurs d'arête pour l'écart standard et l'envergure sous-jacents au flanc de signal.

4. Procédé selon une des revendications1 à 3, **caractérisé en ce que** l'écart standard et l'envergure des valeurs d'intensité des points d'image de l'image enregistrée (14) ou d'une zone d'image sont déterminés.

5. Procédé selon une des revendications 1 à 4, **caractérisé en ce que** le balayage par étapes a lieu avec une largeur d'étape, qui est équivalente à l'espacement des points d'image de l'image (14) enregistrée ou de la zone d'image.

6. Procédé selon une des revendications 1 à 5, **caractérisé en ce que** la détection de la zone de l'image (14) représentant l'arête de l'objet (9) a lieu à l'échelle du sous-pixel.

7. Procédé selon une des revendications 1 à 6, **caractérisé en ce que** pour détecter la zone de l'image (14) représentant l'arête de l'objet (9) à un critère local d'arête est en outre employé.

8. Procédé selon une des revendications 1 à 7, **caractérisé en ce que** le balayage par étapes y compris la détection d'une zone de l'image (14) représentant l'arête de l'objet (9) est répété à partir d'autres emplacements dans une zone à faible bruit de l'image (14) par faisceau de balayage ou sur la totalité de la surface.

9. Procédé selon une des revendications 1 à 8, **caractérisé en ce que** l'objet (9) à mesurer optiquement est éclairé par réflexion.

10. Appareil de mesure de coordonnées à des fins de mesure optique d'un objet (9), comprenant :
- un éclairage (12a ; 12b ; 12c) pour éclairer l'objet à mesurer (9) ;
- un capteur optique (7) pour une prise de vue optique de l'objet à éclairer (9) ;
- un dispositif de déplacement (5 ; 6 ; 8) pour déplacer le capteur optique (7) ;
- une unité d'exploitation (11) pour exploiter les prises de vue du capteur optique (7), qui est configuré pour mettre en oeuvre un procédé selon une des revendications 1 à 9.

11. Appareil de mesure de coordonnées selon la revendication 10, **caractérisé en ce que** l'éclairage est réalisé au moins partiellement par un éclairage par réflexion (12a ; 12b).

12. Appareil de mesure de coordonnées selon la revendication 10 ou 11, **caractérisé en ce que** le dispositif de déplacement est formé par des entraînements (5 ; 6 ; 8), qui sont respectivement alignés dans la direction d'une coordonnée (x, y, z, α).

13. Appareil de mesure de coordonnées selon une des revendications 10 à 12, **caractérisé en ce que** le capteur optique (7) est formé par une caméra à valeurs de gris ou par une caméra couleur.
